(19)

Europäisches
Patentamt
European
Patent Office
Office européen
des brevets

(11) **EP 3 301 586 A1**

(12) **EUROPEAN PATENT APPLICATION**

(43) Date of publication:
   **04.04.2018  Bulletin 2018/14**

(51) Int Cl.:
   **G06F 17/18** *(2006.01)*

(21) Application number: **17193301.3**

(22) Date of filing: **26.09.2017**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD**

(30) Priority:  **30.09.2016   JP 2016193276**

(71) Applicant: **Hitachi Power Solutions Co., Ltd.
   Hitachi-shi, Ibaraki 317-0073 (JP)**

(72) Inventors:
   • ZHAO, Pushe
     **Chiyoda-ku, Tokyo 100-8280 (JP)**
   • TANAKA, Junichi
     **Chiyoda-ku, Tokyo 100-8280 (JP)**
   • KURIHARA, Masaru
     **Chiyoda-ku, Tokyo 100-8280 (JP)**
   • NODA, Toujirou
     **Hitachi-shi, Ibaraki 317-0073 (JP)**
   • CHIKUMA, Shigeyoshi
     **Hitachi-shi, Ibaraki 317-0073 (JP)**

(74) Representative: **Strehl Schübel-Hopf & Partner
   Maximilianstrasse 54
   80538 München (DE)**

(54) **PRE-PROCESSOR AND DIAGNOSIS DEVICE**

(57)    A pre-processor pre-processes sensor data, and includes: an interval setting unit that acquires chronological sensor data, calculates a first index and a second index indicating different influences for noise included in the sensor data, and sets an interval in which influence of the noise is suppressed in accordance with the first index and the second index; a division processing unit that sets a dividing point at which a trend of the sensor data changes in units of intervals in which the influence of the noise is suppressed, the intervals being set by the interval setting unit; and a dividing point extraction processing unit that generates a dividing point vector from a time of the dividing point set by the division processing unit and outputs the dividing point vector.

*FIG. 1*

EP 3 301 586 A1

**Description**

**BACKGROUND OF THE INVENTION**

**1. Field of the Invention**

The present invention relates to a pre-processor and a diagnosis device.

**2. Description of the Related Art**

In abnormality portent diagnosis technology based on clustering, it is necessary to divide multi-dimensional chronological sensor data changing over time (hereinafter referred to as "sensor data") into a plurality of intervals (period of time) and process them. The reason is that since there is data of different states when there are a plurality of states, clusters for expressing a complicated space distribution are not necessarily able to distinguish different states, and when states are not distinguished, abnormality detection sensitivity is likely to be lowered.

For example, when current sensor data including three states of "OFF," "ON," and "transient" is diagnosed, although a current value is 0.5 times a set value, and it is actually abnormal "ON" current data, there are cases in which it belongs to a cluster of the state of "transient" changing over time, and it is determined to be normal data. In order to solve this problem, a method of dividing the sensor data into a plurality of state intervals and processing each state interval before the abnormality diagnosis (preprocessing) is considered to be effective.

For abnormality portent diagnosis of sensor data changing over time, various data division techniques have been developed until now. A technique of dividing a mode in accordance with a driving state using event information of a facility is disclosed in JP 2015-172945 A. A technique in which event information can be used, but when there is no event information, a state transition point is detected in accordance with a variation range of sensor data is disclosed in JP 2011-243118 A. A technique of calculating a difference between sensor data and sensor data adjacent thereto and dividing data in accordance with a value of the difference is disclosed in JP 2013-175108 A.

Using the techniques disclosed in JP 2015-172945 A, JP 2011-243118 A, and JP 2013-175108 A, it is possible to divide data within ranges disclosed therein. However, in the technique disclosed in JP 2015-172945 A, since the event information is necessary, there is a problem that it depends on a type of facility and a setting of a sensor, and division is unable to be performed when the event information is insufficient.

Further, in the technique disclosed in JP 2011-243118 A, since a known steady state is detected to estimate a transient state interval, it is a condition that a known steady state is necessary, and thus it is difficult to divide data which is not steady but changes over time.

In the technique disclosed in JP 2013-175108 A, since noise of sensor data has big influence on a result of a difference calculation with adjacent sensor data, there is a problem in that may fine intervals caused by noise occur even in a division result based on the difference although a smoothing process is performed. Further, since a process of optimizing important parameters for sensor data of various devices, for example, sensor data of a plurality of sensors having different SN ratios such as smoothing is not disclosed, there is a problem in that the accuracy of data division changes depending on a different sensor.

Further, generally, actual sensor data often includes both a large variation (trend) and a small variation. In this case, there is a demand for a function that enables the user to define or check a degree of variation which is dealt as noise or whether or not it is necessary to deal it as a signal and divide it, but a technique of responding to the demand is not disclosed in JP 2013-175108 A, and it is difficult for the user to customize the division.

**SUMMARY OF THE INVENTION**

In this regard, it is an object of the present invention to provide a technique of dividing sensor data while suppressing influence of the noise for diagnosis.

A representative pre-processor of a diagnosis device according to the present invention pre-processes sensor data, and includes: an interval setting unit that acquires chronological sensor data, calculates a first index and a second index indicating different influences for noise included in the sensor data, and sets an interval in which influence of the noise is suppressed in accordance with the first index and the second index; a division processing unit that sets a dividing point at which a trend of the sensor data changes in units of intervals in which the influence of the noise is suppressed, the intervals being set by the interval setting unit; and a dividing point extraction processing unit that generates a dividing point vector from a time of the dividing point set by the division processing unit and outputs the dividing point vector.

According to the present invention, it is possible to provide a technique of dividing sensor data while suppressing influence of the noise for diagnosis.

**BRIEF DESCRIPTION OF THE DRAWINGS**

Fig. 1      is a diagram illustrating an example of an abnormality portent diagnosis system;

Fig. 2      is a diagram illustrating an example of influence caused by a change in an interval;

Fig. 3      is a diagram illustrating an example of an index A set by an interval setting unit;

Fig. 4      is a diagram illustrating an example of an index B set by an interval setting unit;

Fig. 5      is a diagram illustrating an example of a processing flow of an interval setting unit;

Fig. 6      is a diagram illustrating an example of an interval setting;

Fig. 7      is a diagram illustrating an example of a relation between each of an index A and an index B and a length of an interval;

Fig. 8      is a diagram illustrating an example of a processing flow of a data division processing unit;

Fig. 9      is a diagram illustrating an example of a processing flow of dividing point merge processing unit;

Fig. 10      is a diagram illustrating an example of a GUI screen of a division result display control unit;

Fig. 11      is a diagram illustrating an example of division of sensor data in a plurality of sensors;

Fig. 12      is a diagram illustrating another example of division of sensor data in a plurality of sensors;

Fig. 13      is a diagram illustrating an example of sequentially transmitting divisional data;

Fig. 14      is a diagram illustrating an example of responding to each transmission of divisional data;

Fig. 15      is a diagram illustrating an example of transmitting divisional data in parallel;

Fig. 16      is a diagram illustrating an example of a dividing point vector;

Fig. 17      is a diagram illustrating an example of a processing flow of abnormality portent diagnosis using a dividing point vector;

Fig. 18      is a diagram illustrating an example of calculating a feature quantity of sensor data; and

Fig. 19      is a diagram illustrating a use example of a plurality of abnormality diagnosis results.

**DESCRIPTION OF THE PREFERRED EMBODIMENTS**

An embodiment of the present invention relates to an abnormality portent diagnosis device or an abnormality portent diagnosis system including a pre-processor and an abnormality portent diagnosis processing unit. As an example of the embodiment, each of a pre-processor and an abnormality portent diagnosis processing unit may be a general computer, an implementation of software that performs processing in accordance with a program, or an implementation of dedicated hardware other than a general computer.

Further, it may be implemented such that dedicated hardware is incorporated into a computer, and an implementation of software is combined with an implementation of hardware. The pre-processor may be externally connected as preprocessing of the abnormality portent diagnosis processing unit, may be incorporated into the abnormality portent diagnosis processing unit and internally connected, or may be externally connected as a module shared with other data processing. Hereinafter, an embodiment will be described with reference to the accompanying drawings.

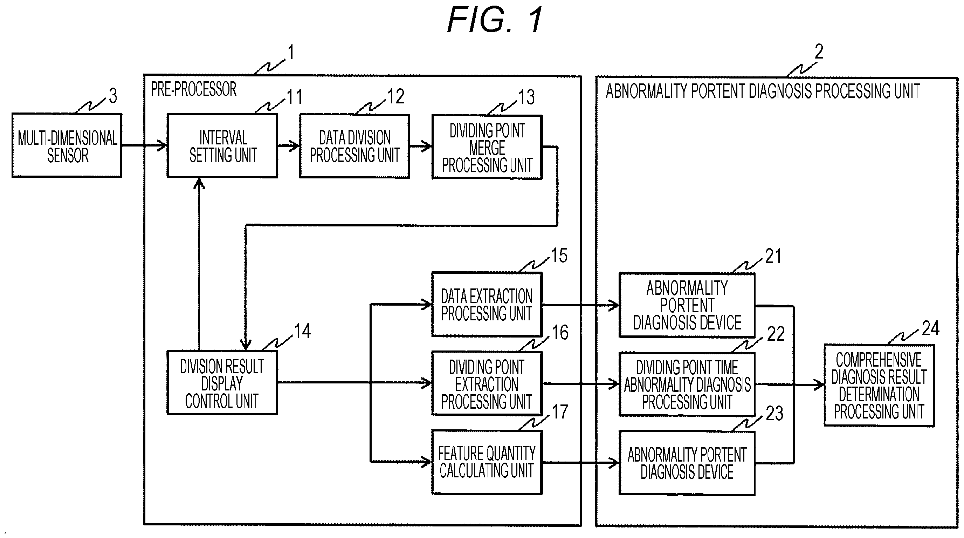

An example of dividing sensor data changing with the passage of time into a plurality of intervals and performing diagnosis on each interval or a period of time between dividing points in which a plurality of intervals are collected will be described. Fig. 1 is a diagram illustrating an example of an abnormality portent diagnosis system.

An example of the abnormality portent diagnosis system includes an abnormality portent diagnosis processing unit 2, a pre-processor 1 serving as a pre-processing device thereof, and a multi-dimensional sensor 3 as illustrated in Fig. 1. The multi-dimensional sensor 3 outputs multi-dimensional sensor data chronologically and may be installed outside the abnormality portent diagnosis system, and the pre-processor 1 and the abnormality portent diagnosis processing unit 2 may be an abnormality portent diagnosis device.

The pre-processor 1 includes an interval setting unit 11, a data division processing unit 12, a dividing point merge processing unit 13, a division result display control unit 14, a data extraction processing unit 15, a dividing point extraction processing unit 16, and a feature quantity calculating unit 17. The abnormality portent diagnosis processing unit 2 includes an abnormality portent diagnosis device 21, a dividing point time abnormality diagnosis processing unit 22, an abnormality portent diagnosis device 23, and a comprehensive diagnosis result determination processing unit 24.

In the pre-processor 1, for sensor data collected from the multi-dimensional sensor 3 serving as a monitoring device, a temporal change indicating a variation(trend) in sensor data, that is, a temporal change in an inclination when sensor data is indicated by a graph is obtained. To this end, the interval setting unit 11 obtains a time range indicated by one inclination as an interval and obtains a temporal change in sensor data by obtaining an inclination of the sensor data for each interval.

Here, one inclination has any one of a positive value, a negative value, or a substantially zero value. The data division processing unit 12 collected consecutive intervals having the same inclination value into one and obtains a point at which an inclination value changes, that is, a point serving as a boundary point of the collected interval, as a dividing point. The dividing point merge processing unit 13 merges periods of time before and after the dividing point in accordance with a condition such as a distance (period of time) between the dividing points or the number of dividing points. In other words, the dividing point is deleted, and two periods of time that are divided are merged into one.

The division result display control unit 14 causes the sensor data and the dividing point to be displayed on a screen, receives correction of division performed by the user, transmits correction content to the interval setting unit 11 as a parameter (a coefficient), and causes the interval setting unit 11 to perform reprocessing.

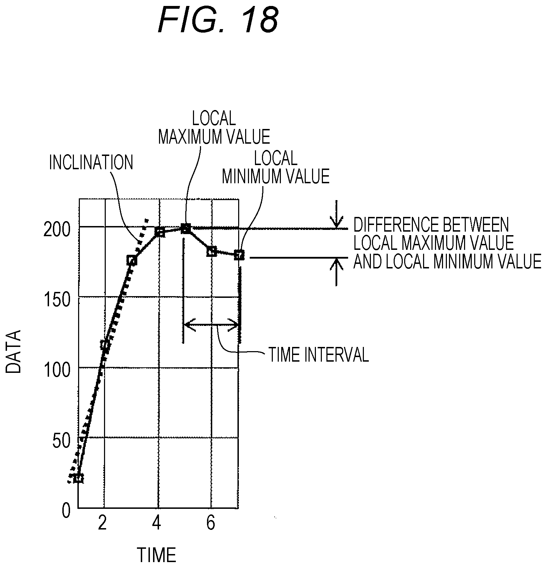

The data extraction processing unit 15 extracts sensor data for each period of time between the dividing points and transmits the extracted sensor data to abnormality portent diagnosis processing unit 2. The dividing point extraction processing unit 16 extracts a time of the dividing point and transmits the extracted time to the abnormality portent diagnosis processing unit 2. The feature quantity calculating unit 17 calculates a feature quantity of the sensor data for each period of time between the dividing points and transmits the extracted feature quantity to the abnormality portent diagnosis processing unit 2. The feature quantity will be described later with reference to Fig. 18.

The abnormality portent diagnosis processing unit 2 receives the sensor data, the time of the dividing point, and the feature quantity from the pre-processor 1. The abnormality portent diagnosis device 21 performs abnormality diagnosis in accordance with a known clustering technique using the sensor data of each period of time between the dividing points. The dividing point time abnormality diagnosis processing unit 22 performs abnormality diagnosis using the time of the dividing point. The abnormality portent diagnosis device 23 performs abnormality diagnosis in accordance with a known clustering technique using the feature quantity of each period of time between the dividing points.

The comprehensive diagnosis result determination processing unit 24 comprehensively determines whether or not the sensor data is abnormal for each period of time between the dividing points on the basis of the abnormality diagnosis results of abnormality portent diagnosis device 21, the dividing point time abnormality diagnosis processing unit 22, and the abnormality portent diagnosis device 23.

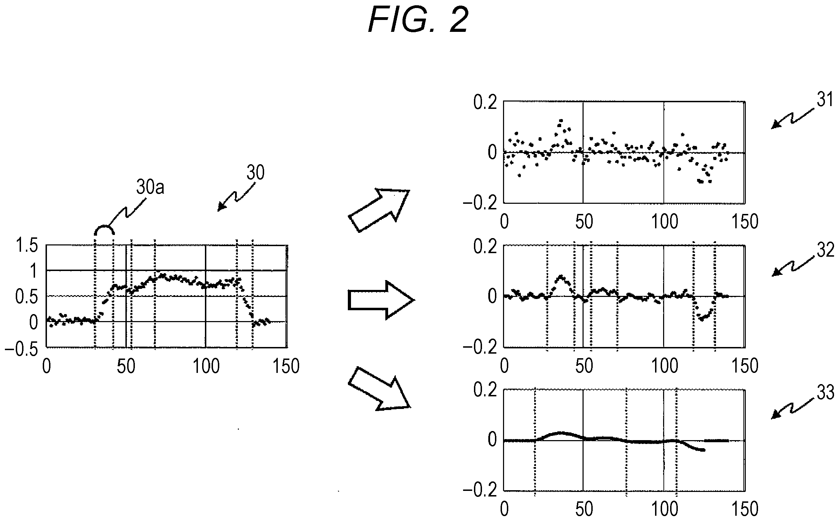

Fig. 2 is a diagram illustrating an example of influence caused by a change in the interval. When the interval set by the interval setting unit 11, that is, the period of time indicated by one inclination changes, the expression accuracy of the variation (trend) in the sensor data is affected. In a graph 30, a vertical axis indicates a value of the sensor data, a horizontal axis indicates a time, and since the sensor data contains noise, there is turbulence in the value of the sensor data.

Intervals are set to "3," "11," and "31" for the sensor data of the graph 30, one inclination is calculated from the value of the sensor data for each interval, and graphs indicating relations between the calculated inclination and the time as the temporal change are indicated by graphs 31, 32, and 33.

The graph 31 indicates a graph when the interval is set to "3." As illustrated in the graph 31, when the interval is too short, since influence of the noise on an inclination calculation is large, and the trend of the sensor data is not distinguished from the noise, the trend of the sensor data is not accurately reflected.

The graph 32 indicates a graph when the interval is set to "11." As illustrated in the graph 32, when an appropriate interval is set, the trend of the sensor data is accurately reflected. The reason is that when a long interval is set, an inclination according to linear regression is calculated using more pieces of data, and thus there is an averaging effect. In other words, the influence of the noise is reduced by a large number of sensor data indicating the trend.

However, when the interval is too long, an excessive averaging effect occurs, leading to an adverse effect. The graph 33 indicates a graph when the interval is set to "33." As illustrated in the graph 33, not only the noise but also the trend of part of the sensor data included in original sensor data is lost, and the trend of the sensor data is not accurately reflected.

In this situation, it is necessary to optimize the interval in order to reduce both the influence of the noise and the influence of the excessive averaging effect. Since the widths of the noise and the trend of the data are different depending on sensor data, the optimal interval is different. Next, an evaluation index used for optimizing the interval will be described.

Further, when the multi-dimensional sensor 3 detects a state of a certain device, there are cases in which the sensor data abruptly changes as in sensor data in a period of time 30a, and a pattern of the change indicates a constant pattern specific to the device. For example, there are cases in which a pattern (for example, a rising waveform) of sensor data when a device is powered on is constant, and the occurrence of this pattern may be a time reference of the sensor data. The constant pattern may be a change of the value of the sensor data from "0."

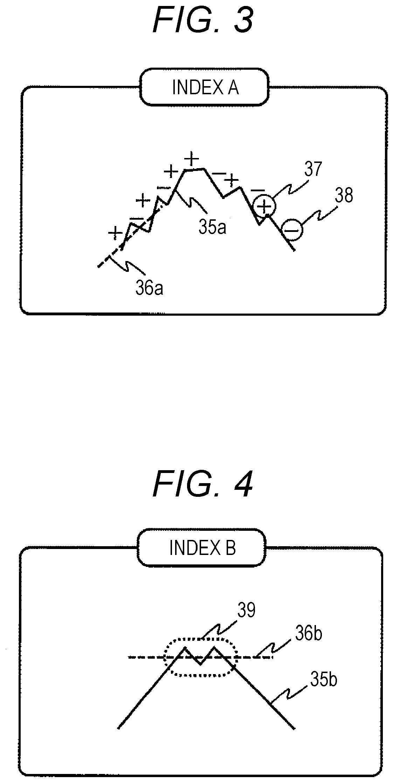

Figs. 3 and 4 are diagrams illustrating examples of evaluation indices of the interval setting unit 11. The evaluation indices are examples of indices for evaluating both the influence of the noise and the influence of the excessive averaging effect to reduce both influences, but the evaluation indices are not limited to the examples, and various statistics or formulas may be used as the evaluation index.

In the example illustrated in Fig. 3, a certain interval (period of time) is set, one inclination is calculated as a positive (+) or negative (-) sign from a plurality of pieces of sensor data included in the interval, and the number of pairs of adjacent different signs within the period of time serving as an evaluation target (a period of time including a plurality of intervals) is used as an index for evaluating the influence of the noise. For example, when the influence of the noise is large, the calculated inclination also greatly varies, and the number of pairs of adjacent different signs increases.

In Fig. 3, when a certain first period of time is set as the interval, an inclination calculated from the sensor data is indicated by a polygonal line 35a in which a part within the interval is a straight line, a part in which the straight line diagonally rises rightwards has a positive (+) inclination, and a part in which the straight line diagonally falls rightwards has a negative (-) inclination. A pair of adjacent positive (+) 37 and negative (-) 38 is a pair of adjacent different signs. Here, both negative (-) adjacent to the left of the positive (+) 37 and the positive (+) 37 are also a pair of adjacent different signs.

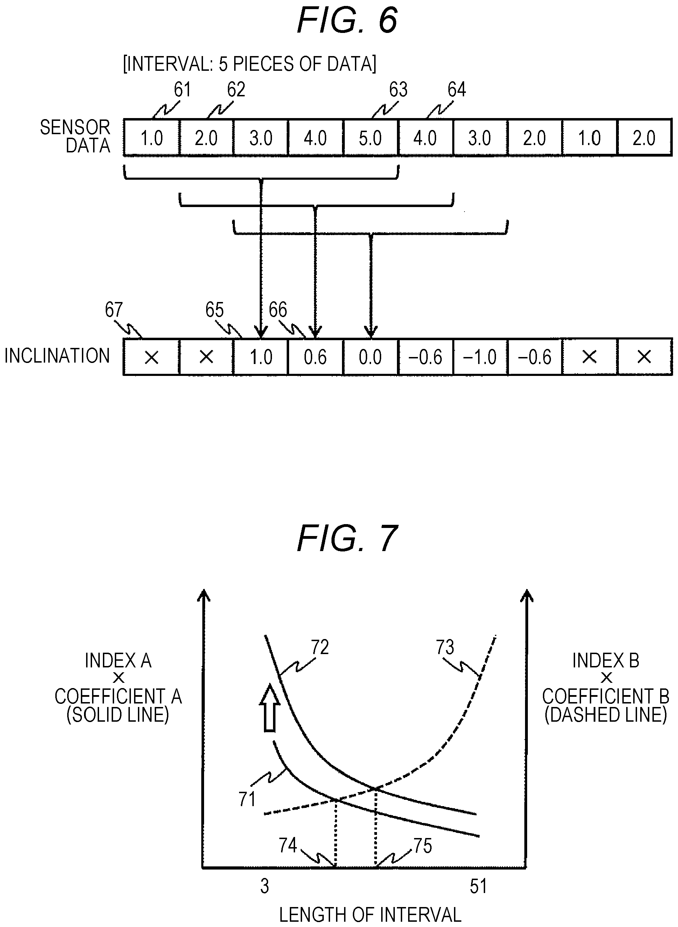

Since the index decreases as the interval increases, a part in which the inclination lasts long is useful. In the case of an interval longer than the first period of time, for example, an inclination of a straight line 36a is obtained. Hereinafter, this index is referred to as an "index A." In order to calculate the index A, an inclination changing over time to be described later in Fig. 6 is calculated.

When the inclination is calculated from sensor data of each interval using a linear regression technique, a sum of residuals between the straight line and the sensor data calculated by the linear regression technique is calculated. The residual indicates an error between the trend and actual sensor data when the trend of the sensor data in the interval is indicated by one straight line. Then, when the sensor data in the interval follows the same trend, the residual is the error caused by the noise included in the actual sensor data.

When the interval is too long, and sensor data of different trends is included in one interval, since a phenomenon that the trend is different is also included in the residual as the error, the residual tends to be larger than usual. Due to this feature, in the present embodiment, the residual is used for evaluating the influence of the excessive averaging effect as the index.

In Fig. 4, when a certain second period of time is set as an interval, the inclination calculated from the sensor data is indicated by a polygonal line 35 b in which at least a part within the interval is a straight line, and for example, when the sensor data includes two different trends, in the polygonal line 35b, a first trend is the left side, and inclination is positive (+), and a second trend is the right side, and inclination is negative (-).

In the case of an interval longer than the second period of time, for example, an inclination of the straight line 36b straddling the two trends is obtained, and although a residual according to fine positive (+) and negative (-) inclinations in a region 39 is based on noise, a residual occurs between the sensor data indicating the first trend and the sensor data indicating the second trend as in a left end and a right end of the region 39.

As described above, since a value of this index increases as the interval increases, this index is opposite to the index A, and a part in which the inclination lasts short is useful. Hereinafter, this index is referred to as an "index B." In order to calculate the index B, an inclination changing over time to be described later in Fig. 6 is calculated. Then, it is possible to optimize the interval using both the index A and the index B.

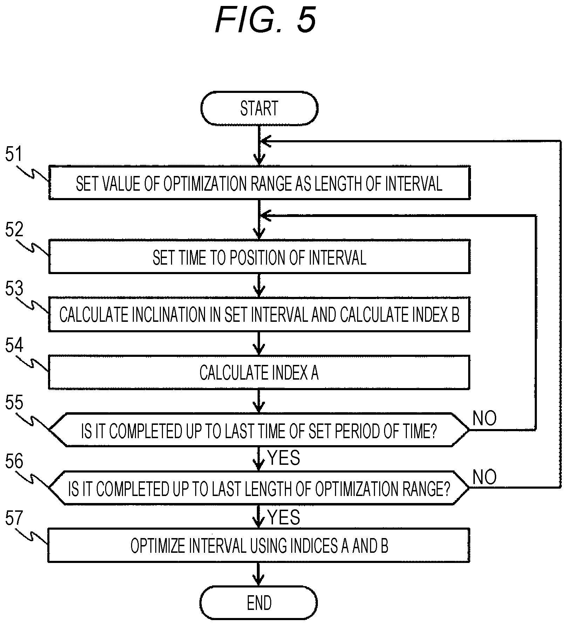

Fig. 5 is a diagram illustrating an example of a processing flow of the interval setting unit 11. In this process, a length of the interval is optimized using the index A and the index B. To this end, the index A and the index B are calculated while changing the length and the position of the interval, the index A and the index B for a combination of the length and the position of the interval are obtained, and the length of the interval is decided.

An optimization range of the length of the interval is set to values "3" to "51" in advance, and in order to perform a calculation on all odd values "3," "5," "7," ..., "49," and "51," and thus the interval setting unit 11 extracts one length of the interval which is not yet used for the calculation from the optimization range and sets the extracted length as the length of the interval of the calculation target (step 51). For this reason, the odd value "3" is set in first execution of step 51, and the odd value "5" may be set in second execution.

Further, in advance, a period of time of the sensor data to be used for optimization (for example, an operation period of time of a target from which sensor data is detected such as eight periods of time) is set in advance, and in order to perform the calculation while moving the position of the interval at all times within the period of time, the interval setting unit 11 extracts one time which is not yet used for the calculation from the set period of time, and sets the extracted time as the position of the interval of the calculation target or the time of the center of the interval (Step 52). This setting will be described later with reference to Fig. 6.

The interval setting unit 11 calculates the inclination of the graph of the sensor data in the interval set in steps 51 and 52, calculates the index B (step 53), and calculates the index A (step 54). Then, it is determined whether or not up to the last sensor data of the period of time set in advance is used as the calculation target (step 55), and when up to the last sensor data is determined not to be used as the calculation target, the process returns to step 52, the interval is moved so that the position of the next sensor data is included, and when up to the last sensor data is determined to be used as the calculation target, the process proceeds to step 56.

Fig. 6 is a diagram illustrating an example of a setting of the interval. Since the inclination of the sensor data included in the interval is calculated while moving the time in which the interval is set, the value of the calculated inclination indicates the temporal change. In this example, there is sensor data at intervals of certain periods of time, the length of the interval corresponds to five pieces of data, and the time length of the interval is also constant.

The linear regression indicated by (Formula 3) is performed on (length of interval-1)/2) pieces of data before and after the sensor data at the center of the interval serving as the calculation target.

$$S = a \times T + b \qquad \text{(Formula 3)}$$

Here, (Formula 3) is a formula indicating a straight line when a vertical axis is S, and a horizontal axis is T, and S (dependent variable) indicates a value corresponding to the sensor data, T (independent variable) indicates a time, a coefficient "a" indicates the inclination, a coefficient "b" indicates a value corresponding to the sensor data at an end (section) of the interval.

In Fig. 6, sensor data 63 is calculated from sensor data 61 which is S, and a value 65 of the inclination which is the coefficient "a" is calculated from the time of the sensor data which is T. The coefficient "b" may also be calculated. In execution of step 52, the interval is set to the next position, and sensor data 62 to sensor data 64 are used for a calculation of a value 66 of the inclination.

Since the calculation is unable to be performed on the first sensor data and the last sensor data of the period of time of the sensor data used for optimization set in advance (the period of time serving as the evaluation target) since the sensor data before and after it is insufficient, zero or a value which can be distinguished from the inclination may be set. In the example of Fig. 6, "x" is set as a value 67 or the like. Further, in the present embodiment, the calculation is performed on each pieces of sensor data of the period of time set in advance, but the inclination may be calculated while skipping several pieces of sensor data in order to reduce a calculation time, and the inclination of the time in which the calculation is not performed may be supplemented with an average value of adjacent calculated inclinations.

Further, in the present embodiment, it is defined that the inclination at the center of the interval is calculated, but another position within the interval may be defined depending on an implementation state. For example, when the calculation is performed in real time, it may be defined that an inclination at a calculation time point is calculated with the sensor data included in an interval prior to the calculation time point. Further, preprocessing such as an outlier process and a normalization process may be performed before the above process.

Here, for example, the calculation of the index B in step 53 may be a sum of five differences calculated by calculating the sensor data 63 from the sensor data 61, calculating the coefficient "a" and the coefficient "b" of (Formula 3) from T, then calculating S of (Formula 3) in which the time of the sensor data 61 is T using the calculated coefficient "a" and the coefficient "b," calculating a difference (corresponding to the residual) between the calculated S and the value of the sensor data 61, and repeating the calculation of the difference up to the sensor data 63.

In the calculation of the index A in step 54, the value 65 is stored, it is determined whether or not the stored value 65 and the value 66 are a pair of different signs when the value 66 is stored, the number of pairs of different signs is counted up when the stored value 65 and the value 66 are determined to be a pair of different signs, and the storage process, the determination process, and the counting-up process may be performed even after the value 66.

Referring back to Fig. 5, in step 56, the interval setting unit 11 determines whether or not it is completed up to the last length of the optimization range. For example, in the odd values "3," "5," "7," ..., "49," and "51," it is determined to be completed up to the odd value "51." If it is determined not to be completed, the process returns to step 51, the next odd value is set, and when it is determined to be completed, the process proceeds to step 57. Examples of the index A and the index B calculated in steps 51 to 56 are illustrated in Fig. 7.

As described above, the index A increases as the interval decreases, and the index B increases as the interval increases. For this reason, solid lines 71 and 72 of values obtained by multiplying the index A by a coefficient A increase as the interval decreases, and a dashed line 73 of a value obtained by multiplying the index B by a coefficient B increases as the interval increases. In the example of Fig. 7, lengths 74 and 75 of the interval at intersection points of the solid lines 71 and 72 and the dashed line 73 may be used as a length of an optimized interval (step 57).

In this case, it is possible to change degrees of importance of the index A and the index B in accordance with settings of the coefficient A and the coefficient B, and the length of the optimized interval is influenced. For example, when the coefficient A is increased for the solid line 71, it becomes the solid line 72, a degree of influence of the index A increases, the length 74 of the interval changes to the length 75 of the interval, and the interval increases. The coefficient A and the coefficient B may be set by the user or may be set in accordance with a division result of test data.

An example of another optimization evaluation will be described using (Formula 1) and (Formula 2).

$$\text{Evaluation value C} = \text{index A} \times \text{coefficient A} + \text{index B} \times \text{coefficient B} \qquad \text{(Formula 1)}$$

$$\text{Evaluation value D} = \text{index A} \times \text{index B} \qquad \text{(Formula 2)}$$

The length of the interval in which the evaluation value C calculated by (Formula 1) is the smallest may be taken as the length of the optimized interval. Further, the length of the interval in which the evaluation value D calculated by (Formula 2) becomes maximum may be used as the length of the optimized interval. The optimization illustrated in Fig. 7, the optimization using (Formula 1), and the optimization using (Formula 2) may be selectable.

In the present embodiment, a technique of adjusting the coefficient A and the coefficient B in accordance with to a result of correcting the division result by the user is provided. Accordingly, it is possible to customize the division process easily although the user does not understand a division process mechanism. The detailed description will be given later.

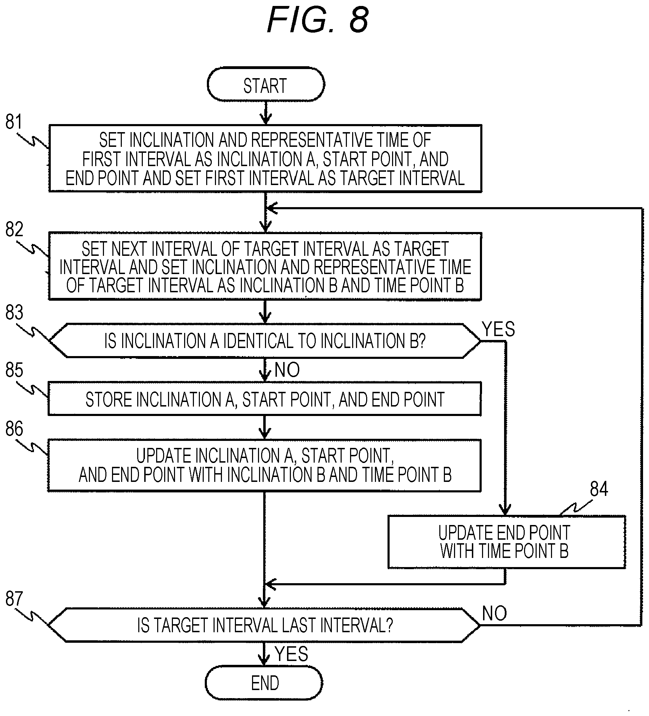

Fig. 8 is a diagram illustrating an example of a processing flow of the data division processing unit 12. The data division processing unit 12 divides the sensor data by the time using the information of the interval set by the interval setting unit 11. Thus, in the present embodiment, a time at which the inclination value changes to positive, negative, or substantially zero with the passage of time is referred to as a dividing point.

However, for substantially zero, since noise is included in actual sensor data, there are few perfect zero points, when an absolute value of the inclination value is smaller than a preset threshold value, it is defined as substantially zero indicating a steady trend which is rising nor falling. Depending on this definition, it may be defined as positive or negative when the absolute value of the inclination value is larger than the same threshold value.

The data division processing unit 12 first sets an inclination value of a temporally first interval as an inclination A, sets a representative time of the first interval as both a start points and an end point, and sets the first interval as a target interval of the following process (Step 81). The representative time of the interval may be a time corresponding to the sensor data at the center of the interval or a time corresponding to another sensor data in the interval.

The data division processing unit 12 sets a temporally next interval of the target interval set in step 81 or previous step 82 (in a loop of step 82 to step 87) as a new target interval, and sets an inclination value of the new target interval and a representative time as an inclination B and a time point B.

The data division processing unit 12 determines whether the inclination A and the inclination B have the same inclination value, and when the inclination A and the inclination B are determined to have the same inclination value, they are not divided at this end point, and thus in order to set the time point B as a new provisional end point, the time of the time point B is set as the end point, and the end point is updated (step 84). Further, when the inclination A and the inclination B are determined not to have the same inclination value, the process proceeds to step 85 since they are divided at this end point.

The data division processing unit 12 stores the values of the inclination A, the start point, and the end point (step 85), and records information indicating that the division is performed at the end point. Then, the inclination A, the start points, and the end point are updated by setting the value of the inclination B as the inclination A and setting the value of the time point B as both the start point and the end point (step 86) and used as a reference for finding a new dividing point.

The data division processing unit 12 determines whether or the target interval is a temporally last interval (step 87), and when the target interval is determined not to be the last interval, the process returns to step 82, a next interval of the target interval is set as a new target interval, and the process is repeated, and when the target interval is determined to be the last interval, the division process ends. The target interval in step 87 is the target interval set in step 82. Further, when the process proceeds from step 84 to step 87, and the division process ends, the values of the inclination A, the start point, and the end point may be stored.

Each of the start point and the end point stored in execution of step 85 is the dividing point, and a period of time between the start point and end point is referred to as a period of time between the dividing points. Then, when a plurality of intervals are included in the period of time between the dividing points, since the inclination values (positive, negative, or substantially zero) of the included intervals are identical to one another, one period of time between the dividing points is likely to indicate one trend.

Further, in a period of time between dividing points and a temporally next period of time between dividing points, two dividing points, that is, the dividing point serving as the end point of the former period of time between the dividing points and the dividing point serving as the start point of the latter period of time between the dividing points are adjacent to each other, and thus one of the two adjacent dividing points may be regarded as one dividing point between the former period of time between the dividing points and the latter period of time between the dividing points.

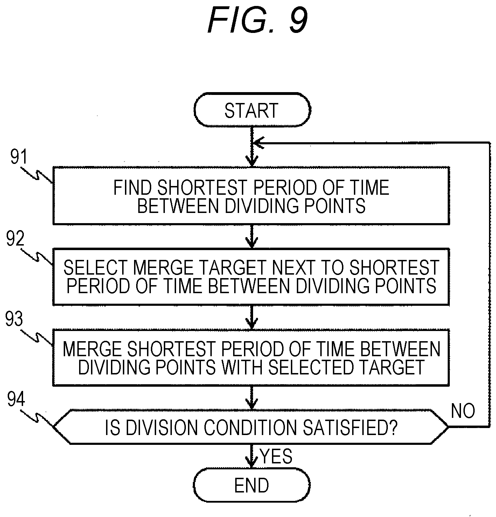

Fig. 9 is a diagram illustrating an example of a processing flow of the dividing point merge processing unit 13. The dividing point merge processing unit 13 merges the adjacent periods of time between the dividing points, reduces the dividing points, and increases the period of time between the dividing points. For example, when the interval is set through the interval setting unit 11, it is possible to reduce the influence of the noise, but some unnecessary short period of times between the dividing points occurring due to the noise may remain, and this problem is solved by the merging.

In addition, when the number of period of times between the dividing points is known, it is possible to improve the accuracy of division by merging the periods of time between the dividing points. For example, if a condition of dividing the sensor data into three is set in advance, the periods of times between the dividing points are merged in the ascending order of the lengths of the period of times between the dividing points so that three periods of time between the dividing points remain finally. In the present embodiment, the adjacent periods of time between the dividing points are merged starting from the shortest period of time between the dividing points.

To this end, the dividing point merge processing unit 13 first finds the shortest period of time between the dividing points among the periods of times between the dividing points on the basis of the dividing points stored in step 85 or the like by the data division processing unit 12 (step 91). In this example, a shorter period of time between dividing points out of two periods of time between dividing points before and after the found period of time between the dividing points is selected as a merge target (step 92). Then, the period of time between the dividing points of the selected merge target is merged with the shortest period of time between the dividing points (step 93).

In step 92 of this example, the shorter period of time between the dividing points is selected as the merge target, but the longer period of time between the dividing points may be selected as the merge target depending on actual data. Alternatively, the merge target may be selected on the basis of other merge target selection criteria set by the user.

The merged period of time between the dividing points is stored as one period of time between the dividing points, and it is determined whether or not a division condition is satisfied (step 94), and when the division condition is determined not to be satisfied, the process returns to step 91, and the process of finding the shortest period of time between the dividing points using the merged period of time between the dividing points as one period of time between the dividing points is repeated until the division condition is satisfied.

For example, the division condition may be a condition that the number of sensor data included in the shortest period of time between the dividing points is "5" or more, a condition that the number of periods of time between the dividing points is "3," or any other condition. The merge process may be skipped depending on the purpose of division, and when the merge process is skipped, an output of the data division processing unit 12 is transmitted to the division result display control unit 14. Further, when the division condition is satisfied, the dividing point merge processing unit 13 may transmit the dividing points divided by the data division processing unit 12 to the division result display control unit 14 without merging it.

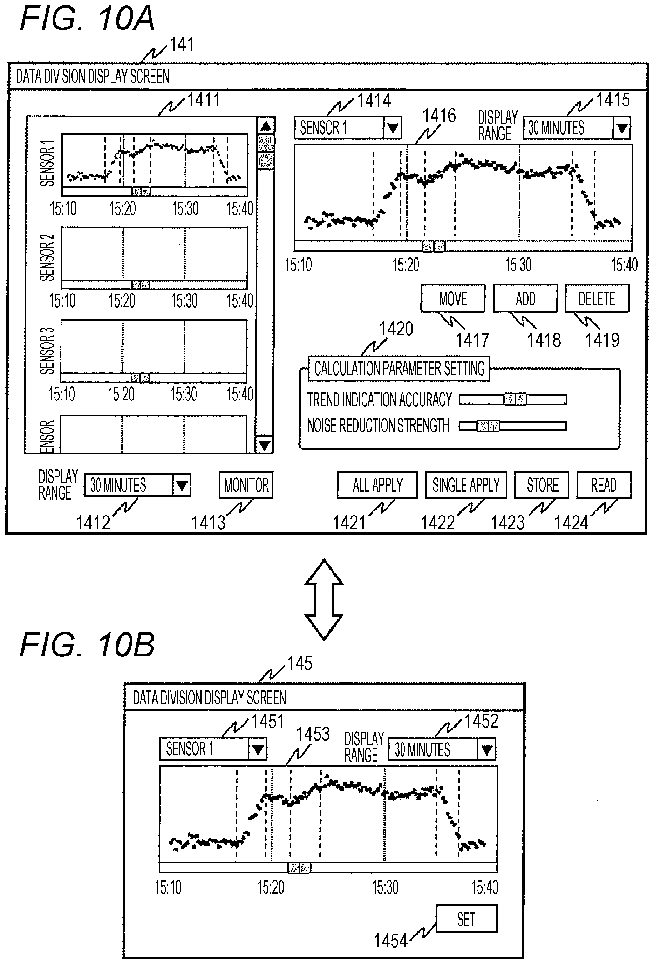

Fig. 10 is a diagram illustrating an example of a GUI screen of the division result display control unit 14. A setting screen 141 and a monitoring screen 145 are included in the GUI screen of the present embodiment in a switchable manner. As the display of the division result, a plurality of pieces of sensor data and the dividing points are displayed using a horizontal axis and a vertical axis as a time and sensor data value as in a display portion 1411 of the setting screen 141.

A scroll bar of a horizontal axis is displayed in order to display previous division results. A scroll bar of a vertical axis is displayed in the display portion 1411 in order to display the division results for five or more sensors. For the period of time to be displayed without scrolling, a selection menu such as 30 minutes, 1 hours, or 1 day is displayed in a display range 1412. When click (touch) to the monitor button 1413 is detected, switching to the monitoring screen 145 is performed, and the monitoring screen is displayed.

In the monitoring screen 145, a division result of a selected sensor is enlarged and displayed with a simple screen such as a display portion 1453. In a selection menu 1451, an identifier of a selected sensor is displayed. A display range 1452 is a display allowing selection similar to the display range 1412. When click on a set button 1454 is detected, switching to the setting screen 141 is performed, and the setting screen is displayed. Further, when the monitoring screen 145 is displayed, since there is no correction operation performed by the user, information of the sensor data and the dividing point is transmitted to a next processing unit without change.

The setting screen 141 is a screen used for the user to correct the division result, but since it is necessary to know the division process mechanism in order to directly correct the dividing point, there are cases in which it is hard for some users to correct. In order to solve the problem, the present embodiment provides an intuitively understandable parameter. For example, as illustrated in a calculation parameter setting 1420, a trend indication accuracy slide and a noise reduction strength side are displayed, and movement of the slide is detected so that a value according to the position of the slide can be input.

A value input in accordance with the position of the slide is converted into a parameter for the division process. For example, when a slide operation of increasing the value of the trend indication accuracy is detected, the value of the coefficient B of (Formula 1) used in the process of the interval setting unit 11 is increased, and the degree of influence of the index B is increased. Further, when a slide operation of increasing the value of the noise reduction strength is detected, the value of the coefficient A of (Formula 1) used in the process of the interval setting unit 11 is increased, and the degree of influence of the index A is increased. Accordingly, the user is able to easily control the operation of the division process. A division state of a result of changing the parameter may be displayed on a display portion 1416 in real time.

A more convenient input function is a function of receiving direct correction performed by the user in the division result screen. In a selection menu 1414, an identifier of a selected sensor is displayed, and an enlarged view of the sensor data and the division result of the sensor selected through the selection menu 1414 is displayed on a display portion 1416. Here, a display range 1415 is a display enabling selection similar to the display range 1412.

In the display portion 1416, a vertical dashed line is an example of the dividing point, and when the vertical dashed line is designated by the user, the dividing point corresponding to the designated vertical dashed line becomes a correction target. A move button 1417, an add button 1418, and a delete button 1419 are buttons for giving an instruction to perform correction of setting an offset to the position of the dividing point, an instruction to perform correction of adding the dividing point, and an instruction to perform correction of deleting the dividing point. Designation of the vertical dashed line or designation of a time with no vertical dashed line in the display portion 1416 is detected, click to each button is detected, and processes based on the detections are performed.

For example, when the user observes the division result, it is understood that one important variation is not divided since the width of the variation is small. At that time, when the user clicks an add button 1418 and clicks a position at which the dividing point is desired to be added in the display portion 1416 of the setting screen 141, the division result display control unit 14 which has obtained information of the click finds a parameter which is divided at the position of the dividing point designated by the clock.

In a case in which the dividing point is added, since the calculation interval is too long, and so there is a possibility that an excessive average effect will occur, the degree of influence of the index B may be increased until the added dividing point is calculated due to the increase in the coefficient B of (Formula 1). When a parameter by which the correction of the user can be realized is found, the parameter may be transmitted to the interval setting unit 11 and reflected in a subsequent division process.

Further, an all apply button 1421 for giving an instruction to apply the corrected parameter to data of a plurality of sensors, a single apply button 1422 for giving an instruction to apply the corrected parameter to data of one sensor, a store button 1423 for giving an instruction to store the parameter, and a read button 1424 for reading the stored parameter are also displayed on the setting screen 141.

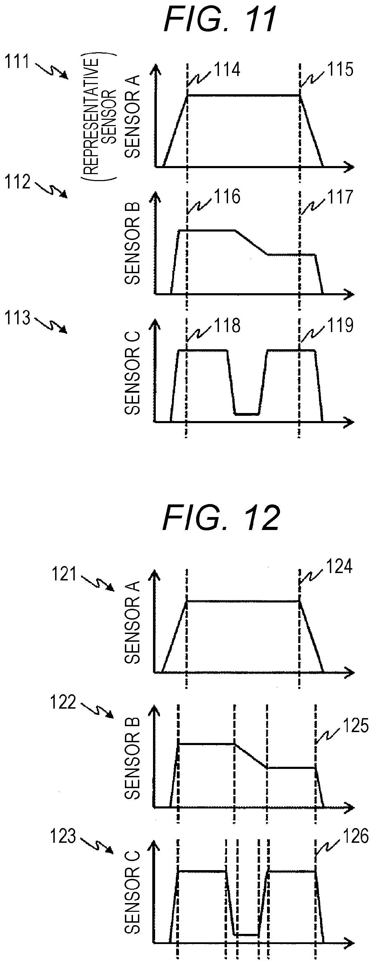

Fig. 11 is a diagram illustrating an example of division of sensor data in a plurality of sensors. When the sensor data obtained by a plurality of sensors is divided, there is a possibility that the division result will differ in accordance with each sensor. For example, the number of divided intervals may be different, or the times of the dividing points may be different from each other. On the other hand, sensor data of other sensors may be divided on the basis of the division of the selected representative sensor.

For example, when a plurality of pieces of sensor data are clustered for each interval, since it is unable to be expressed in a multi-dimensional space if there is data loss, it is necessary to cause it to coincide with the dividing point of sensor data of a sensor having no data loss. Therefore, in this division, a dividing point of sensor data of a selected representative sensor is applied to all pieces of sensor data.

In the example of Fig. 11, a "sensor A" is a representative sensor, and dividing points 114 and 115 calculated on the basis of sensor data 111 of the "sensor A" are applied to sensor data 112 of a "sensor B" and sensor data 113 of a "sensor C," and thus dividing points 116 and 117 and dividing points 118 and 119 are obtained.

As a process of selecting the representative sensor, an SN ratio of sensor data of each sensor may be calculated, and a sensor having the highest SN ratio may be selected as the representative sensor. Further, a sample of sensor data of each sensor may be divided, and a sensor having the largest number of divided intervals may be selected as the representative sensor. Further, a sensor having high sensitivity for detecting abnormality in accordance with a previous abnormality portent diagnosis case may be selected as the representative sensor.

Fig. 12 is a diagram illustrating another example of division of sensor data in a plurality of sensors. In a case in which sensor data obtained by a plurality of sensors is divided, the division result may differ in accordance with each sensor. Depending on content of the abnormality portent diagnosis, the dividing point of the sensor data of each sensor may be compared, or the feature quantity may be calculated for each sensor, and in this case, the sensor data may be divided for each sensor.

In the example of Fig. 12, the number of dividing points of sensor data 121 of a "sensor A" is "2," the number of dividing points of sensor data 122 of a "sensor B" is "4," and the number of dividing points of sensor data 123 of a "sensor C" is "6," and the number of dividing points differs for each sensor. Further, a dividing point 124, a dividing point 125, and a dividing point 126 differ in the time of the dividing point.

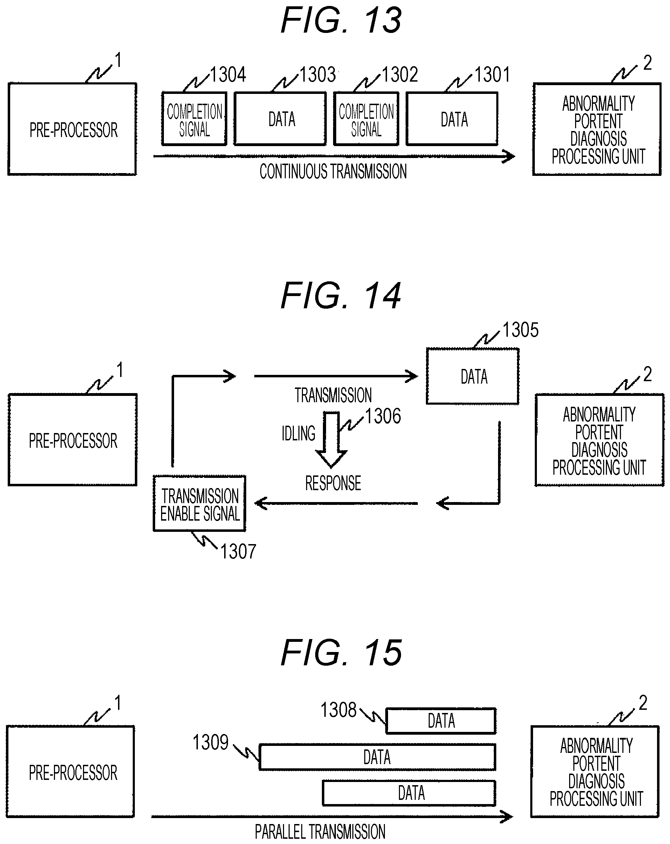

An example of a procedure of transmitting divisional data from the pre-processor 1 to the abnormality portent diagnosis processing unit 2 will be described with reference to Figs. 13 to 15. The divisional data is data indicating the state of the sensor data between the dividing points and includes time information (timestamp) of the dividing point of the sensor data or an index indicating an order (position) in the sensor data, and the divisional data may be a division vector to be described later. Each piece of divisional data is transmitted in a time order, and each piece of divisional data is transmitted so that each piece of divisional data can be identified in accordance with a setting of the abnormality portent diagnosis processing unit 2.

Fig. 13 is a diagram illustrating an example of sequentially transmitting the divisional data. In this example, when the pre-processor 1 transmits one piece of divisional data 1301 corresponding to one dividing point to the abnormality portent diagnosis processing unit 2, a completion signal 1302 indicating transmission completion between the dividing points is transmitted, and then when next divisional data 1303 is transmitted, a completion signal 1304 is transmitted. Fig. 14 is a diagram illustrating an example of responding to each transmission of the divisional data. When the pre-processor 1 transmits divisional data 1305 to the abnormality portent diagnosis processing unit 2, the communication first enters a state of idling 1306, and when the pre-processor 1 receives a transmission enable signal 1307 from the abnormality portent diagnosis processing unit 2, next divisional data is transmitted.

Fig. 15 is a diagram illustrating an example of transmitting the divisional data in parallel. The pre-processor 1 transmits a plurality of pieces of divisional data 1308 and 1309 to the abnormality portent diagnosis processing unit 2 in parallel. In addition to parallel transmission, parallel transmission may be repeated in combination with the transmission procedures described above with reference to Figs. 13 and 14.

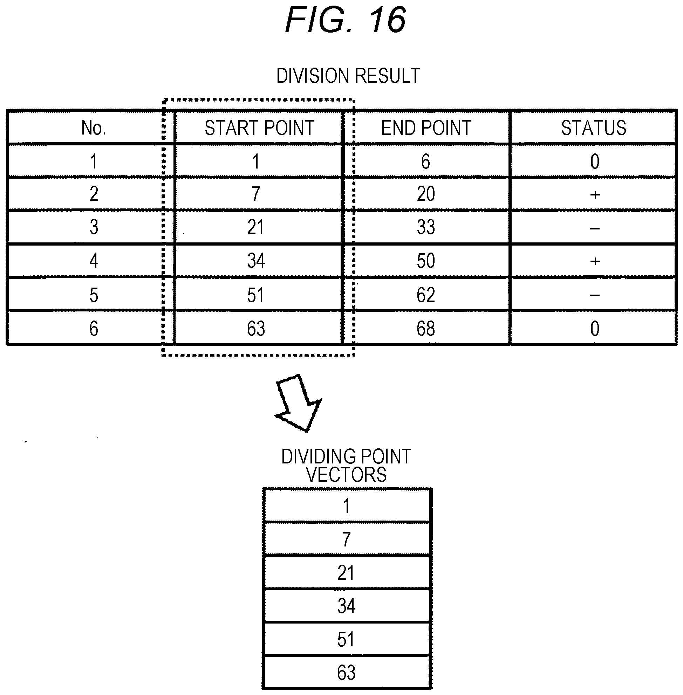

Fig. 16 is a diagram illustrating an example of a dividing point vector. Information of the dividing point is converted into a dividing point vector which is easily processed in the portent diagnosis. In the example of Fig. 16, the division result is configured with an order in the sensor data, the time of the start point of the period of time between the dividing points, the time of the end point of the period of time between the dividing points, and the state indicating the inclination of the sensor data between the dividing points, and the dividing point vector is a vector indicating the time of the start point of the period of time between dividing points.

Here, in order to further facilitate processing, the time or the index is converted into a real number. In the example of Fig. 16, the times of the start point and the end point are indicated by integers, but time is generally indicated by information of a format such as "March 01, 2015, 08:10:00." Such information is mapped to a linear real number of maintaining a relation between the dividing points.

Thus, for example, "March 1, 2015, 08:10:00" which is the time of the start point of the period of time between the dividing points is compared with "January 01, 2015, 00:00:00" which is a preset reference time, and a time difference (seconds) between both times is calculated and converted into a real number of "5127000."

As apparent from the division result of Fig. 16, since the end point of the period of time between certain dividing points and the start point of the period of time between the next dividing points are adjacent to each other, these times are also arranged in the ascending order, and thus the real numbers of the dividing point vectors are also arranged in the ascending order. Further, the dividing point vector may be a vector related to the time of the end point of the period of time between the dividing points.

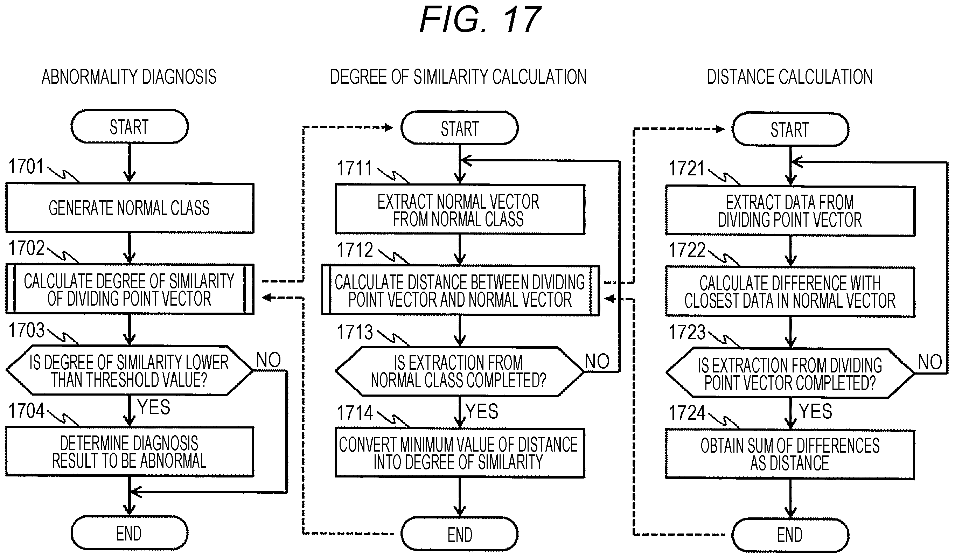

Fig. 17 is a diagram illustrating an example of a processing flow of the abnormality portent diagnosis using the dividing point vector. In the example of Fig. 17, learning is performed through clustering or the like using a vector of normal data, a degree of similarity is calculated in order to compare the learned vector with a dividing point vector of newly acquired sensor data, and it is determined whether or not the newly acquired sensor data is abnormal. Further, various types of machine learnings may be applied to the abnormality diagnosis for the dividing point vector.

The normal data has regularity in the variation pattern (trend pattern), and when actual sensor data in a normal state and normal data are divided through the same process, a large difference does not occur in the division result indicating the variation pattern, that is, the dividing point vector. However, actual sensor data in an abnormal state, that is, abnormal data has a variation different from that of the normal data, and a new dividing point is likely to occur due to the variation, and thus it is possible to detect the abnormality on the basis of the difference in the dividing point. Examples of the difference in the dividing point include ae difference in the number of dividing points and a difference in the position.

First, the dividing point time abnormality diagnosis processing unit 22 generates a normal class using the normal data as a learning process (step 1701). In order to generate the class, a label of the class is added to data belonging to the class. For this reason, the normal class is a set of data with a label indicating normality, and particularly, the normal data class is a dividing point vector in which a label is added to each element. Hereinafter, in order to distinguish from the dividing point vector of the sensor data of the diagnosis target, the dividing point vector of the normal class is referred to as a "normal vector."

There may be a plurality of types of normal data, and there may be a plurality of types of normal labels. For example, there may be a plurality of types of detection modes of a sensor, a plurality of types of operation modes in a device serving as a sensor detection target, and different variation patterns may be present as a normal pattern in accordance with the detection mode or the operation mode.

In a case in which the variation pattern of the abnormal data is known in advance, an abnormal class may be created. Further, when there are a plurality of abnormal states, and a plurality of types of abnormal data are found out, a plurality of classes such as an abnormal class A, an abnormal class B, an abnormal class C may be generated. The generation of the class in step 1701 may be executed in advance before the abnormality diagnosis.

In order to compare the dividing point vector of the sensor data of the diagnosis target with the normal vector of the normal data, the dividing point time abnormality diagnosis processing unit 22 calculates a degree of similarity (step 1702). A specific process of calculating the degree of similarity is a process of steps 1711 to step 1714 to be described later. Then, it is determined whether or not the calculated degree of similarity is lower than a preset threshold value (step 1703), and when the calculated degree of similarity is determined to be lower than a preset threshold value, the diagnosis result is determined to be abnormal (step 1704). For this reason, a value indicating an abnormality may be stored in a predetermined storage region or the like.

In order to calculate the degree of similarity, the dividing point time abnormality diagnosis processing unit 22 first extracts one normal vector which is not previously extracted from the normal class including a plurality of normal vectors (step 1711). Then, the distance between the extracted normal vector and the dividing point vector is calculated. A specific process of calculating the distance is a process of steps 1721 to step 1724 to be described later.

When it is determined that a normal vector which is not extracted remains in the normal class, and the extraction is not completed (step 1713), the dividing point time abnormality diagnosis processing unit 22 causes the process to return to step 1711 and extracts other normal vectors. When the extraction is determined to be completed in step 1713, a minimum value is specified among distances calculated from a plurality of normal vectors, and a reciprocal of the specified minimum value is calculated and used as the degree of similarity (step 1714).

In order to calculate the distance, the dividing point time abnormality diagnosis processing unit 22 first extracts one data which is not previously extracted from the dividing point vector including a plurality of pieces of data (step 1721). Then, a difference with data with the closest value in the normal vector extracted in step 1711 is calculated (step 1722).

When it is determined that data which is not extracted remains in the dividing point vector, and the extraction is not completed (step 1723), the dividing point time abnormality diagnosis processing unit 22 causes the process to return to step 1721 and extracts other data. When the extraction is determined to be completed in step 1723, a sum of the differences calculated in step 1722 is calculated as a distance.

In the above process, for example, the dividing point vector of the sensor data of the diagnosis target may be indicated by SD, the three normal vectors (the dividing point vectors of the normal class) may be indicated by ND-A, ND-B, and ND-C, each of the dividing point vectors may be the dividing point vector including the start point (the dividing point) of a plurality of intervals described above with reference to Fig. 16, and "00 (hours): 00 (minutes): 00 (seconds)" of a date at which each piece of (sensor) data is acquired may be used as the reference time instead of "January 01, 2015, 00: 00: 00."

Further, some patterns (for example, a rising waveform) of the dividing point vector may be set in advance, the time of the dividing point vector matching with the set pattern may be used as the reference time as described above with reference to Fig. 2, and another time in the dividing point vector (the real numbers corresponding to the start point of the interval) may be reconverted.

Further, since the data included in the dividing point vector is the converted real number, the difference between the two real numbers may be calculated as a part of the distance, and a combination in which the value of the difference is small may be specified as being close. A sum of differences between two real numbers may be calculated, and if a distance between SD and ND-A is indicated by DIST-A, a distance between SD and ND-B is indicated by DIST-B, and a distance between SD and ND-C is indicated by DIST-C, 1/min (DIST-A, DIST-B, and DIST-C) may be calculated as the degree of similarity.

Here, the distance calculation may be a calculation in which both the difference in the number of dividing points and a difference in the position of the dividing point (the time or the converted real number) are reflected. ND-A, ND-B, and ND-C may be a plurality of classes such as a normal class A, a normal class B, and a normal class C which differ in a degree of normality, and when the degree of similarity with the normal class C with the lowest degree of normality is high, the probability of abnormality may be determined to be high. Since the degree of similarity with a plurality of classes is determined, it contributes to more accurate diagnosis and determination of a type or a cause of abnormality.

Fig. 18 is a diagram illustrating an example of calculating the feature quantity of the sensor data. The feature quantity is an amount of variation in the sensor data between certain dividing points. For example, the feature quantity calculating unit 17 calculates a "local maximum value" and a "local minimum value" within a range of one period of time between dividing points illustrated in Fig. 18 and calculates a difference between the calculated "local maximum value" and the "local minimum value." Here, the calculated difference is not chronological, becomes one value for one period of time between the dividing points, and does not depend on an "inclination" or a "time interval" illustrated in Fig. 18.

The abnormality portent diagnosis device 23 performs the abnormality diagnosis through the clustering technique using the calculated feature quantity as multi-dimensional data. For example, as a normal sample, each of a plurality of pieces of sensor data for learning is divided into a plurality of periods of time between dividing points, and a normal cluster is obtained in advance using a K-Means for each period of time between corresponding dividing points in a plurality of pieces of sensor data.

The abnormality portent diagnosis device 23 compares the sensor data of the diagnosis target divided into the periods of time between the dividing points with the normal cluster for each period of time between the dividing points, and determines that it is different from the sensor data of the diagnosis target when the shortest distance from the center of the cluster exceeds a predetermined threshold value.

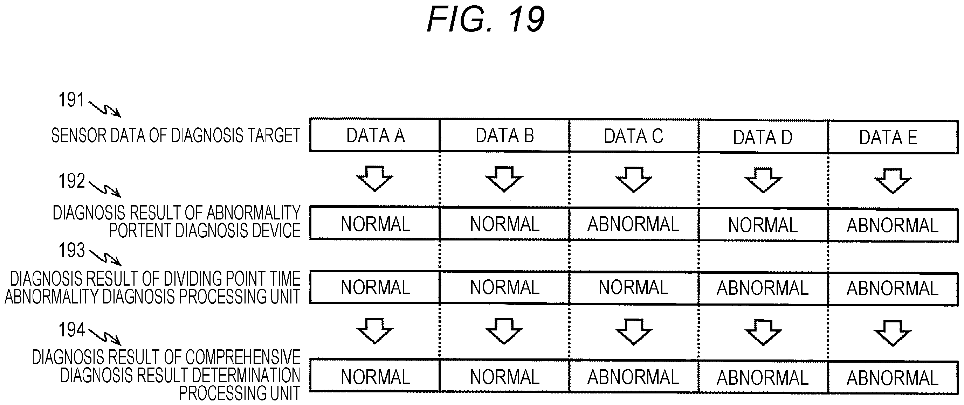

Fig. 19 is a diagram illustrating a use example of a plurality of diagnosis results. In the example of Fig. 19, the comprehensive diagnosis result determination processing unit 24 comprehensively determines a diagnosis result 194 in a state in which there are "data A" to "data E" in accordance with content of sensor data 191 which is the diagnosis target, and a diagnosis result 192 of the abnormality portent diagnosis device 21 or the abnormality portent diagnosis device 23 and a diagnosis result 193 of the dividing point time abnormality diagnosis processing unit 22 are determined in association with each piece of data.

In this example, the diagnosis results 192, 193, and 194 are either "normal" or "abnormal," and when any one of the diagnosis results 192 and 193 is "abnormal" as in the "data C," the "data D," and the "data E," the diagnosis result 194 is determined to be "abnormal." Further, when both of the diagnosis results 192 and 193 are "normal" as in the "data A" and the "data B," the diagnosis result 194 is determined to be "normal."

Here, the example in which the diagnosis results 194 is determined from the two diagnosis results 192 and 193 has been described, but a comprehensive diagnosis result may be determined on the basis of three or more diagnosis results. The comprehensive diagnosis result may be determined on the basis of the diagnosis result of the abnormality portent diagnosis device 21 according to the sensor data output from the data extraction processing unit 15, the diagnosis result of the dividing point time abnormality diagnosis processing unit 22 according to the dividing point output from the dividing point extraction processing unit 16, and the diagnosis result of the abnormality portent diagnosis device 23 according to the feature quantity output from the feature quantity calculating unit 17.

Further, the comprehensive diagnosis result determination processing unit 24 may perform a process of a statistical technique as the comprehensive determination. For example, when a proportion of "abnormal" among a plurality of diagnosis results is equal to or greater than a preset percentage, it may be determined to be "abnormal," and a proportion of "abnormal" calculated by weighting each of a plurality of diagnosis results is equal to or greater than a preset percentage, it may be determined as to be "abnormal."

Since the interval is set using the index A and the index B as described above, it is possible to perform the data division in which the noise of the sensor data is suppressed. Further, since the intervals having the same inclination state are collected, it is possible to indicate the trend, and since the dividing point is set in the intervals having the different inclination states, it is possible to indicate the change in the trend. Then, since the short period of time between dividing points is merged with another period of time between dividing points, the influence of the noise can be further reduced.

Further, since the sensor data and the dividing point are displayed, the user is able to check the dividing point, and since the coefficient A and the coefficient B are changed in accordance with the user's operation on the change in the dividing point, it is possible to correct the dividing point easily even when the user has no knowledge about the division process. Furthermore, it is possible to set the dividing point even in each piece of sensor data of a plurality of sensors, and it is also possible to perform comprehensive determination on the basis of a plurality of types of diagnosis results.

The above description, the claims and the drawings disclose multiple features in specific combinations. The person skilled in the art will understand that the invention as defined in the claims can be adapted to various fields of application by considering further combinations or sub-combinations of these features without departing from the scope of the invention as defined in the claims.

**Claims**

1. A pre-processor that pre-processes sensor data, comprising:

an interval setting unit that acquires chronological sensor data, calculates a first index and a second index indicating different influences for noise included in the sensor data, and sets an interval in which influence of the noise is suppressed in accordance with the first index and the second index;
a division processing unit that sets a dividing point at which a trend of the sensor data changes in units of intervals in which the influence of the noise is suppressed, the intervals being set by the interval setting unit; and
a dividing point extraction processing unit that generates a dividing point vector from a time of the dividing point set by the division processing unit and outputs the dividing point vector.

2. The pre-processor according to claim 1,

wherein the interval setting unit calculates one change value for one interval from a plurality of pieces of sensor data included in one interval for each of a plurality of intervals, calculates the first index based on a difference between adjacent change values, calculates the second index based on a difference between the change value and the sensor data, and sets the interval in accordance with the first index and the second index, and
the division processing unit sets the dividing point in accordance with two intervals in which a difference between change values calculated in two intervals which are temporally closest satisfies a preset condition, the two intervals being set by the interval setting unit.

3. The pre-processor according to claim 2,

wherein the interval setting unit sets a plurality of candidates as a length of the interval, calculates the first index and the second index for the length of each of the set candidates, and sets the length of interval in accordance with the first index and the second index.

4. The pre-processor according to claim 3,

wherein the interval setting unit further sets a first coefficient and a second coefficient, and sets a length of the interval in which a result obtained by multiplying the first index by the first coefficient coincides with a result obtained by multiplying the second index by the second coefficient.

5. The pre-processor according to claim 4,

wherein the interval setting unit sets an interval that indicates a period of time including sensor data in which the number of sensor data is the length of the set candidate and sequentially becomes a target in accordance with a chronological order of the sensor data, specifies a plurality of pieces of sensor data included in each set interval, and calculates one change value for each interval.

6. The pre-processor according to claim 5,

wherein the interval setting unit calculates one change value for one interval by calculating an inclination of linear regression by using a plurality of pieces of sensor data included in one interval as a dependent variable and using a time corresponding to each of the plurality of pieces of sensor data used as the dependent variable as an independent variable.

7. The pre-processor according to claim 6,

wherein the interval setting unit calculates the first index by counting the number of differences between a sign of an inclination value of a target interval and a sign of an inclination value of a next target interval of the interval, and calculates the second index by calculating a sum of residuals of a regression line and the sensor data based on the inclination value.

8. The pre-processor according to claim 7,

wherein the division processing unit sets the dividing point when a calculated inclination in a target interval is determined to be different from a calculated inclination of the next target interval of the interval, the interval being set by the interval setting unit.

9. The pre-processor according to claim 2, further comprising,

a merge processing unit that merges a period of time between dividing points shorter than a preset value with a period of time between dividing points adjacent to the period of time between the dividing point, and sets a new dividing point, the period of time between dividing points being set by the division processing unit, wherein the dividing point extraction processing unit generates a dividing point vector from the time of the dividing point set by the division processing unit or a time of the dividing point set by the merge processing unit, and outputs the dividing point vector.

10. The pre-processor according to claim 4, further comprising,

a display control unit that displays the sensor data acquired by the interval setting unit and the dividing point set by the division processing unit, receives an operation of changing the dividing point, and changes the first coefficient and the second coefficient in accordance with the received operation.

11. A diagnosis device which determines an abnormality on the basis of sensor data, comprising:

a pre-processor; and
a diagnosis processing unit,
wherein the pre-processor includes:

an interval setting unit that acquires chronological sensor data, calculates a first index and a second index indicating different influences for noise included in the sensor data, and sets an interval in which influence of the noise is suppressed in accordance with the first index and the second index;
a division processing unit that sets a dividing point at which a trend of the sensor data changes in units of intervals in which the influence of the noise is suppressed, the intervals being set by the interval setting unit; and
a dividing point extraction processing unit that generates a dividing point vector from a time of the dividing point set by the division processing unit and outputs the dividing point vector to the diagnosis processing unit, and

the diagnosis processing unit includes
a diagnosis processing unit that receives a division vector output from the pre-processor, calculates a degree of similarity with a normal vector, and determines a diagnosis result to be abnormal when the degree of similarity is determined to be lower than a preset threshold value.

12. The diagnosis device according to claim 11,

wherein the interval setting unit calculates one change value for one interval from a plurality of pieces of sensor data included in one interval for each of a plurality of intervals, calculates the first index based on a difference between adjacent change values, calculates the second index based on a difference between the change value and the sensor data, and sets the interval in accordance with the first index and the second index, and
the division processing unit sets the dividing point in accordance with two intervals in which a difference between change values calculated in two intervals which are temporally closest satisfies a preset condition, the two intervals being set by the interval setting unit.

13. The diagnosis device according to claim 12,

wherein the diagnosis processing unit calculates a distance between the received division vector and each of a plurality of normal vectors, converts a minimum value of the distance into a degree of similarity, calculates a difference between data of the received division vector and data of the normal vector of a calculation target of distance, and calculates a sum of the differences as the distance.

14. The diagnosis device according to claim 11,

wherein the pre-processor further includes a feature quantity calculating unit that calculates a difference between a local maximum value and a local minimum value of the sensor data included in the period of time between the dividing points set by the division processing unit as a feature quantity and outputs the feature quantity to the diagnosis processing unit, and
the diagnosis processing unit receives the feature quantity output from the pre-processor, diagnoses the diagnosis result to be abnormal in accordance with a distance from a feature quantity of a normal cluster, and comprehensively determines a plurality of diagnosis results.

**15.** The diagnosis device according to claim 14,

wherein the pre-processor further includes a data extraction processing unit that outputs the sensor data included in the period of time between the dividing points set by the division processing unit to the diagnosis processing unit, and
the diagnosis processing unit receives the sensor data output from the pre-processor, diagnoses the diagnosis result to be abnormal in accordance with a distance from the normal cluster, and comprehensively determines a plurality of diagnosis results.

FIG. 1

FIG. 2

## FIG. 3

## FIG. 4

# FIG. 5

```
                    ┌──────────────┐
                    │    START     │
                    └──────┬───────┘
                           │        ◄──────────────────────────┐
51                         ▼                                    │
   ┌────────────────────────────────────────────────────────┐  │
   │   SET VALUE OF OPTIMIZATION RANGE AS LENGTH OF INTERVAL │  │
   └────────────────────────┬───────────────────────────────┘  │
52                          ▼      ◄─────────────────────────┐  │
   ┌────────────────────────────────────────────────────────┐ │ │
   │             SET TIME TO POSITION OF INTERVAL            │ │ │
   └────────────────────────┬───────────────────────────────┘ │ │
53                          ▼                                  │ │
   ┌────────────────────────────────────────────────────────┐ │ │
   │ CALCULATE INCLINATION IN SET INTERVAL AND CALCULATE INDEX B │ │
   └────────────────────────┬───────────────────────────────┘ │ │
54                          ▼                                  │ │
   ┌────────────────────────────────────────────────────────┐ │ │
   │                    CALCULATE INDEX A                    │ │ │
   └────────────────────────┬───────────────────────────────┘ │ │
55                          ▼                              NO  │ │
   ◇────────────────────────────────────────────────────◇ ────┘ │
   │  IS IT COMPLETED UP TO LAST TIME OF SET PERIOD OF TIME? │    │
   ◇────────────────────────┬───────────────────────────◇      │
56                     YES  ▼                              NO   │
   ◇────────────────────────────────────────────────────◇ ─────┘
   │ IS IT COMPLETED UP TO LAST LENGTH OF OPTIMIZATION RANGE? │
   ◇────────────────────────┬───────────────────────────◇
57                     YES  ▼
   ┌────────────────────────────────────────────────────────┐
   │          OPTIMIZE INTERVAL USING INDICES A AND B        │
   └────────────────────────┬───────────────────────────────┘
                            ▼
                    ┌──────────────┐
                    │     END      │
                    └──────────────┘
```

# FIG. 6

[INTERVAL: 5 PIECES OF DATA]

SENSOR DATA

| 1.0 | 2.0 | 3.0 | 4.0 | 5.0 | 4.0 | 3.0 | 2.0 | 1.0 | 2.0 |
|-----|-----|-----|-----|-----|-----|-----|-----|-----|-----|

61  62          63   64

INCLINATION

| × | × | 1.0 | 0.6 | 0.0 | −0.6 | −1.0 | −0.6 | × | × |
|---|---|-----|-----|-----|------|------|------|---|---|

67      65   66

# FIG. 7

INDEX A
×
COEFFICIENT A
(SOLID LINE)

INDEX B
×
COEFFICIENT B
(DASHED LINE)

72

73

71

74   75

3                    51

LENGTH OF INTERVAL

# FIG. 8

START

81 — SET INCLINATION AND REPRESENTATIVE TIME OF FIRST INTERVAL AS INCLINATION A, START POINT, AND END POINT AND SET FIRST INTERVAL AS TARGET INTERVAL

82 — SET NEXT INTERVAL OF TARGET INTERVAL AS TARGET INTERVAL AND SET INCLINATION AND REPRESENTATIVE TIME OF TARGET INTERVAL AS INCLINATION B AND TIME POINT B

83 — IS INCLINATION A IDENTICAL TO INCLINATION B? — YES

NO

85 — STORE INCLINATION A, START POINT, AND END POINT

86 — UPDATE INCLINATION A, START POINT, AND END POINT WITH INCLINATION B AND TIME POINT B

84 — UPDATE END POINT WITH TIME POINT B

87 — IS TARGET INTERVAL LAST INTERVAL? — NO

YES

END

# FIG. 9

```
                          ┌─────────────┐
                          │    START    │
                          └─────────────┘
                                 │
                                 ▼◄──────────────────┐
   91                                                │
     ┌──────────────────────────────────────────┐   │
     │     FIND SHORTEST PERIOD OF TIME          │   │
     │        BETWEEN DIVIDING POINTS            │   │
     └──────────────────────────────────────────┘   │
                                 │                   │
   92                            ▼                   │
     ┌──────────────────────────────────────────┐   │
     │ SELECT MERGE TARGET NEXT TO SHORTEST      │   │
     │ PERIOD OF TIME BETWEEN DIVIDING POINTS    │   │
     └──────────────────────────────────────────┘   │
                                 │                   │
   93                            ▼                   │
     ┌──────────────────────────────────────────┐   │
     │ MERGE SHORTEST PERIOD OF TIME BETWEEN     │   │
     │ DIVIDING POINTS WITH SELECTED TARGET      │   │
     └──────────────────────────────────────────┘   │
                                 │                   │
   94                            ▼              NO   │
     ╱────────────────────────────────────────╲─────┘
     ╲  IS DIVISION CONDITION SATISFIED?       ╱
       ╲──────────────────────────────────────╱
                                 │ YES
                                 ▼
                          ┌─────────────┐
                          │     END     │
                          └─────────────┘
```

## FIG. 10A

141

**DATA DIVISION DISPLAY SCREEN**

1411

SENSOR 1
15:10    15:20    15:30    15:40

SENSOR 2
15:10    15:20    15:30    15:40

SENSOR 3
15:10    15:20    15:30    15:40

ENSOR

1414    | SENSOR 1  ▼ |    1416    DISPLAY RANGE    1415    | 30 MINUTES  ▼ |

15:10    15:20    15:30    15:40

| MOVE |    | ADD |    | DELETE |

1417    1418    1419

1420

**CALCULATION PARAMETER SETTING**

TREND INDICATION ACCURACY  ▭▭▭
NOISE REDUCTION STRENGTH  ▭▭▭

DISPLAY RANGE   | 30 MINUTES  ▼ |    | MONITOR |

1412    1413

| ALL APPLY |    | SINGLE APPLY |    | STORE |    | READ |

1421    1422    1423    1424

## FIG. 10B

145

**DATA DIVISION DISPLAY SCREEN**

1451    | SENSOR 1  ▼ |    1453    DISPLAY RANGE    1452    | 30 MINUTES  ▼ |

15:10    15:20    15:30    15:40

| SET |

1454

## FIG. 11

## FIG. 12

# FIG. 13

PRE-PROCESSOR /1

1304 COMPLETION SIGNAL | 1303 DATA | 1302 COMPLETION SIGNAL | 1301 DATA

→ CONTINUOUS TRANSMISSION

ABNORMALITY PORTENT DIAGNOSIS PROCESSING UNIT /2

# FIG. 14

PRE-PROCESSOR /1

TRANSMISSION

IDLING ⇩ /1306

RESPONSE

DATA /1305

ABNORMALITY PORTENT DIAGNOSIS PROCESSING UNIT /2

TRANSMISSION ENABLE SIGNAL

1307

# FIG. 15

PRE-PROCESSOR /1

1308 DATA
1309 DATA
DATA

→ PARALLEL TRANSMISSION

ABNORMALITY PORTENT DIAGNOSIS PROCESSING UNIT /2

# FIG. 16

DIVISION RESULT

| No. | START POINT | END POINT | STATUS |
|-----|-------------|-----------|--------|
| 1 | 1 | 6 | 0 |
| 2 | 7 | 20 | + |
| 3 | 21 | 33 | – |
| 4 | 34 | 50 | + |
| 5 | 51 | 62 | – |
| 6 | 63 | 68 | 0 |

DIVIDING POINT VECTORS

| |
|---|
| 1 |
| 7 |
| 21 |
| 34 |
| 51 |
| 63 |

# FIG. 17

EP 3 301 586 A1

# FIG. 18

# FIG. 19

| 191 SENSOR DATA OF DIAGNOSIS TARGET | DATA A | DATA B | DATA C | DATA D | DATA E |
|---|---|---|---|---|---|
| | ⇓ | ⇓ | ⇓ | ⇓ | ⇓ |
| 192 DIAGNOSIS RESULT OF ABNORMALITY PORTENT DIAGNOSIS DEVICE | NORMAL | NORMAL | ABNORMAL | NORMAL | ABNORMAL |
| 193 DIAGNOSIS RESULT OF DIVIDING POINT TIME ABNORMALITY DIAGNOSIS PROCESSING UNIT | NORMAL | NORMAL | NORMAL | ABNORMAL | ABNORMAL |
| | ⇓ | ⇓ | ⇓ | ⇓ | ⇓ |
| 194 DIAGNOSIS RESULT OF COMPREHENSIVE DIAGNOSIS RESULT DETERMINATION PROCESSING UNIT | NORMAL | NORMAL | ABNORMAL | ABNORMAL | ABNORMAL |

EP 3 301 586 A1

Europäisches
Patentamt

European
Patent Office

Office européen
des brevets

# EUROPEAN SEARCH REPORT

Application Number

EP 17 19 3301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gabriel Pui Cheong Fung ET AL: "The Predicting Power of Textual Information on Financial Markets", IEEE Intelligent Informatics Bulletin, 1 June 2005 (2005-06-01), pages 1-10, XP055454933, Retrieved from the Internet: URL:http://www.comp.hkbu.edu.hk/~iib/2005/Jun/iib_vol5no1_article1.pdf [retrieved on 2018-02-27] * section II * | 1-15 | INV. G06F17/18 |
| X | JIAN JIANG ET AL: "A New Segmentation Algorithm to Stock Time Series Based on PIP Approach", WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 September 2007 (2007-09-21), pages 5609-5612, XP031262545, ISBN: 978-1-4244-1311-9 * section III * | 1-15 | |

TECHNICAL FIELDS SEARCHED (IPC)

G06F

The present search report has been drawn up for all claims

| Place of search | Date of completion of the search | Examiner |
|---|---|---|
| Berlin | 27 February 2018 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015172945 A
- JP 2011243118 A
- JP 2013175108 A